# EUROPÄISCHE PATENTANMELDUNG

(11) **EP 1 342 640 A2**
(43) Veröffentlichungstag der Anmeldung: **10.09.2003**
(21) Anmeldenummer: 03004133.9
(22) Anmeldetag: 26.02.2003
(51) Int. Cl.: B62D 1/16, B62D 6/00

(54) **Lenkwellenstrang**

(30) Priorität: 08.03.2002 DE 10210368
(71) Anmelder: DaimlerChrysler AG, 70567 Stuttgart (DE)
(72) Erfinder: Mosler, Christian, 70374 Stuttgart (DE); Raub, Heinz, 70599 Stuttgart (DE)

(57) **Zusammenfassung**

Die Erfindung bezieht sich auf einen Lenkwellenstrang (5) zwischen Lenkhandhabe (6) und gelenkten Fahrzeugrädern (1) einer Fahrzeuglenkung, mit einer handhabenseitigen Eingangswelle (5') und einer räderseitigen Ausgangswelle (5'') sowie einer diese Wellen antriebsmäßig koppelnden Übertragungsvorrichtung (13) mit durch selbsthemmend angeordneten oder ausgebildeten Motor (14) steuerbarem Übersetzungsverhältnis. Erfindungsgemäß ist der Motor (14) motorwellenseitig mit der einen Welle (15'') zwangsgekoppelt und motorgehäuseseitig mit der anderen Welle (5') drehfest verbunden.

## Beschreibung

Die Erfindung betrifft einen Lenkwellenstrang zwischen Lenkhandhabe und gelenkten Fahrzeugrädern einer Fahrzeuglenkung, mit einer handhabenseitigen Eingangswelle und einer räderseitigen Ausgangswelle sowie einer diese Wellen antriebsmäßig koppelnden Übertragungsvorrichtung mit durch Motor steuerbarem Übersetzungsverhältnis.

Es ist grundsätzlich bekannt, vgl. beispiélsweise die DE 100 00 219 A1, zwischen Lenkhandhabe und gelenkten Fahrzeugrädern ein Überlagerungsgetriebe anzuordnen, welches einerseits mit den gelenkten Fahrzeugrädern zu deren Lenkverstellung und andererseits über zwei Getriebeeingänge mit der Lenkhandhabe sowie einem parameterabhängig gesteuerten Stellmotor verbunden ist. Je nach Geschwindigkeit und Drehrichtung des Stellmotors ergeben sich innerhalb eines weiten Stellbereiches unterschiedliche Übersetzungsverhältnisse zwischen Lenkhandhabe und gelenkten Fahrzeugrädern. Im übrigen können über den Stellmotor auch automatische Lenkeingriffe vorgenommen werden.

Nach der DE 100 00 219 A1 ist der Stellmotor mit relativ zum Fahrzeug stationärem Motorgehäuse angeordnet und treibt ein zum räderseitigen Getriebeausgang koaxiales Schneckenrad, welches mit einer motorseitigen Antriebsschnecke selbsthemmend zusammenwirkt.

Aufgabe der Erfindung ist es nun, in einem Lenkwellenstrang der eingangs angegebenen Art besonders geringe Reibungsverluste bei Betriebsphasen mit stillstehendem Motor zu gewährleisten.

Diese Aufgabe wird erfindungsgemäß dadurch gelöst, daß der Motor motorwellenseitig mit der einen Welle, d.h. Eingangsoder Ausgangswelle, zwangsgekoppelt und motorgehäuseseitig mit der anderen Welle, d.h. Ausgangs- oder Eingangswelle, drehfest verbunden ist.

Die Erfindung beruht auf dem allgemeinen Gedanken, das Motorgehäuse entweder relativ zur lenkhandhabenseitigen Eingangswelle oder relativ zur räderseitigen Ausgangswelle stationär anzuordnen, d.h. das Motorgehäuse bildet einen mit einer dieser Wellen drehfest verbundenen Teil. Dies hat zwangsläufig zur Folge, daß bei stillgesetztem Motor zwischen Eingangs- und Ausgangswelle keinerlei reibungsbehaftete Getriebeteile der Übertragungsvorrichtung wirksam bzw. relativ zu den Wellen bewegt werden müssen.

Die Erfindung bietet den Vorteil einer besonders reibungsarmen Kraft- bzw. Momentenübertragung zwischen Eingangs- und Ausgangswelle.

Da das Motorgehäuse bei Drehung der das Motorgehäuse tragenden Eingangs- oder Ausgangswelle mitgedreht werden muß, wirkt die träge Masse des Motors zwangsläufig im Sinne eines Trägheitsdämpfers, durch den Vibrationen des Lenkwellenstranges ohne die Notwendigkeit weiterer Maßnahmen wirksam gedämpft oder unterdrückt werden.

Die erfindungsgemäße Bauart hat also eine Doppelfunktion, nämlich Verminderung der Reibung und Dämpfung von Vibrationen.

Gemäß einer bevorzugten Ausführungsform der Erfindung ist am Lenkwellenstrang bzw. an der zugeordneten Lenkung ein Servoaggregat vorgesehen, welches grundsätzlich herkömmlicher Bauart sein kann. Dadurch können die zur Lenkbetätigung notwendigen Handkräfte, insbesondere bei langsamer Fahrt und/oder schweren Fahrzeugen, deutlich vermindert werden.

Im übrigen wird hinsichtlich bevorzugter Merkmale der Erfindung auf die Ansprüche sowie die nachfolgend erläuterte Zeichnung verwiesen, anhand der besonders bevorzugte Varianten der Erfindung näher beschrieben werden.

Dabei zeigt
Fig. 1 eine schematisierte Gesamtdarstellung einer Fahrzeuglenkung mit erfindungsgemäßen Lenkwellenstrang und
Fig. 2 eine abgewandelte Ausführungsform.

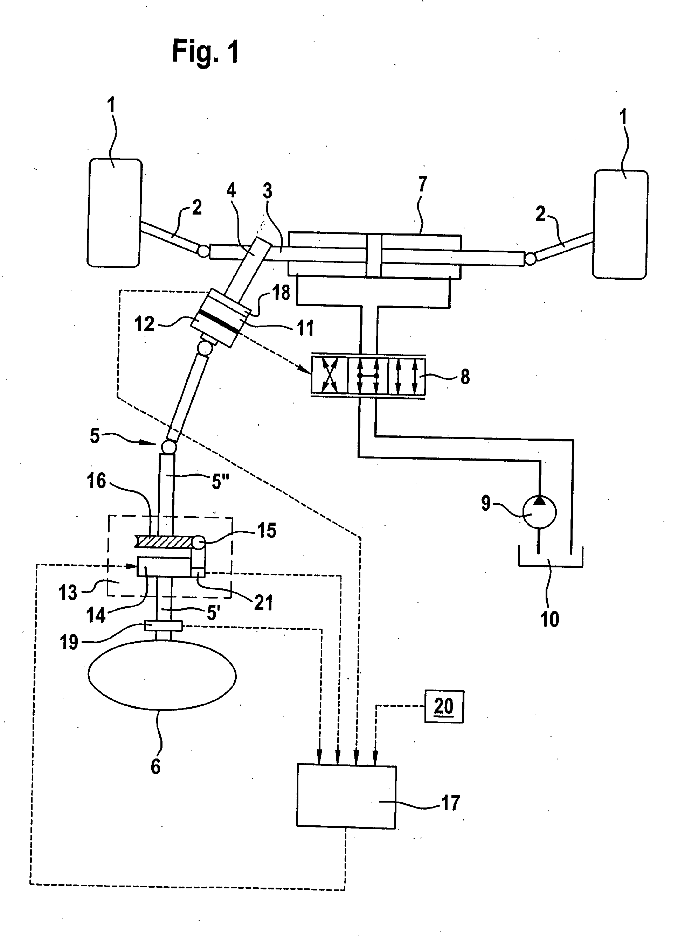

Gemäß der Fig. 1 besitzt ein im übrigen nicht näher dargestelltes Kraftfahrzeug lenkbare Vorderräder 1, welche zu ihrer Lenkverstellung über Spurstangen 2 mit einer in Fahrzeugquerrichtung verschiebbaren Zahn- und Kolbenstange 3 verbunden sind. Je nach Richtung der Verschiebung der Zahn- bzw. Kolbenstange 3 werden also die lenkbaren Vorderräder 1 nach rechts oder links ausgelenkt.

Eine an der Zahn- und Kolbenstange 3 angeordnete Verzahnung kämmt mit einem Ritzel 4, welches über einen Lenkwellenstrang 5 mit einem vom Fahrer gesteuerten Lenkhandrad 6 gekoppelt ist.

Im übrigen trägt die Zahn- und Kolbenstange 3 den Kolben eines als doppelwirkendes Kolben-Zylinder-Aggregat ausgebildeten hydraulischen Servomotors 7, der in grundsätzlich bekannter Weise über ein proportional arbeitendes Servoventil 8 steuerbar mit der Druckseite einer Servopumpe 9 bzw. einem relativ drucklosen Hydraulikreservoir 8 verbundbar ist, an das auch die Saugseite der Servopumpe 9 angeschlossen ist.

Das Servoventil 8 wird in grundsätzlich bekannter Weise in Abhängigkeit von dem Drehmoment gesteuert, welches zwischen Lenkwellenstrang 5 und Ritzel 4 übertragen wird. Dazu kann der Lenkwellenstrang 5 zwei relativ zueinander gegen Federkraft begrenzt drehbare Teile 11 und 12 aufweisen, die je nach Stärke und Richtung des übertragenen Drehmomentes eine mehr oder weniger große Relativdrehung zueinander in der einen oder anderen Richtung ausführen. Durch Kopplung des Servoventiles 8 an die Teile 11 und 12 wird dann gewährleistet, daß das Servoventil 8 entsprechend dem Maß und der Richtung der Relativdrehung zwischen den Teilen 11 und 12 in der einen oder anderen Richtung gegenüber der in Fig. 1 dargestellten Normallage ausgesteuert wird und der Servomotor 7 eine entsprechend steuerbare Servokraft in der einen oder anderen Richtung zur Unterstützung der jeweiligen Lenkmanöver erzeugt.

Des weiteren ist im Lenkwellenstrang 5 eine Übertragungsvorrichtung 13 angeordnet, die im wesentlichen als Überlagerungsgetriebe mit einem elektrischen Stellmotor 14 ausgebildet ist, wobei ein Getriebeanschluß durch ein lenkhandradseitiges Wellenteil 5' und ein weiterer Getriebeanschluß durch ein räderseitiges Wellenteil 5 ' ' gebildet werden. Ein dritter Getriebeanschluß ist mit der Motorwelle des Stellmotors 14 zwangsgekoppelt.

Erfindungsgemäß ist das Gehäuse des Motors 14 stationär am Wellenteil 5' oder 5'' angeordnet. Im Beispiel der Fig. 1 trägt das lenkhandradseitige Wellenteil 5' das Gehäuse des Stellmotors 14.

Der Stellmotor 14 bzw. dessen Motorwelle treibt eine Schnecke 15, die mit einem auf dem anderen Wellenteil, hier dem räderseitigen Wellenteil 5 ' ' angeordneten Schneckenrad 16 zusammenwirkt. Dabei sind Schnecke 15 und Schneckenrad 16 so ausgebildet, daß diese Teile unter Selbsthemmung miteinander zusammenwirken, d.h. die Schnecke 15 kann ausschließlich durch den Stellmotor 14, nicht aber durch das Schneckenrad 16 gedreht werden.

Bei stillgesetztem Stellmotor 14 sind die Wellenteile 5' und 5 ' ' 1 miteinander gemäβ dem Übersetzungsverhältnis 1:1 miteinander zwangsgekoppelt, d.h. die Wellenteile 5' und 5 ' ' führen gleiche Drehhübe mit gleicher Drehgeschwindigkeit aus. Wenn der Stellmotor 14 in der einen oder anderen Drehrichtung arbeitet, erfolgt zwischen den Wellenteilen 5' und 5 ' ' je nach Drehrichtung und Drehgeschwindigkeit des Motors 14 eine mehr oder weniger ausgeprägte Übersetzung ins Langsame oder Schnelle, d.h. im Vergleich zum Drehwinkel und zur Drehgeschwindigkeit des lenkhandseitigen Wellenteiles 5' bzw. des Lenkhandrades 6 führt das räderseitige Wellenteil 5 ' ' einen schnelleren und größeren Drehhub oder einen kleineren und langsameren Drehhub aus. Im Ergebnis wird also das Übersetzungverhältnis zwischen dem Drehhub des Lenkhandrades 6 und der Lenkwinkeländerung der gelenkten Vorderräder 1 verändert.

Zur Steuerung des Stellmotors 14 dient eine elektronische Steuerung 17, die eingangsseitig mit einem ritzelseitigen Winkelsensor 18 sowie einem lenkhandseitigen Winkelsensor 19 sowie einer Sensorik 20 für prinzipiell beliebige weitere Parameter verbunden sein kann und durch entsprechende Steuerung des Stellmotors 14 das Übersetzungsverhältnis zwischen Lenkhandrad 1 und Lenkverstellung der Vorderräder 1 in vorgegebener Weise parameterabhängig verändert. Dabei können die Drehgeschwindigkeit sowie der Drehhub des Stellmotors 14 mittels eines motorseitigen Winkelsensors 21 erfaßt werden, so daß im Ergebnis eine Regelung mit Soll-Istwert-Vergleich möglich ist.

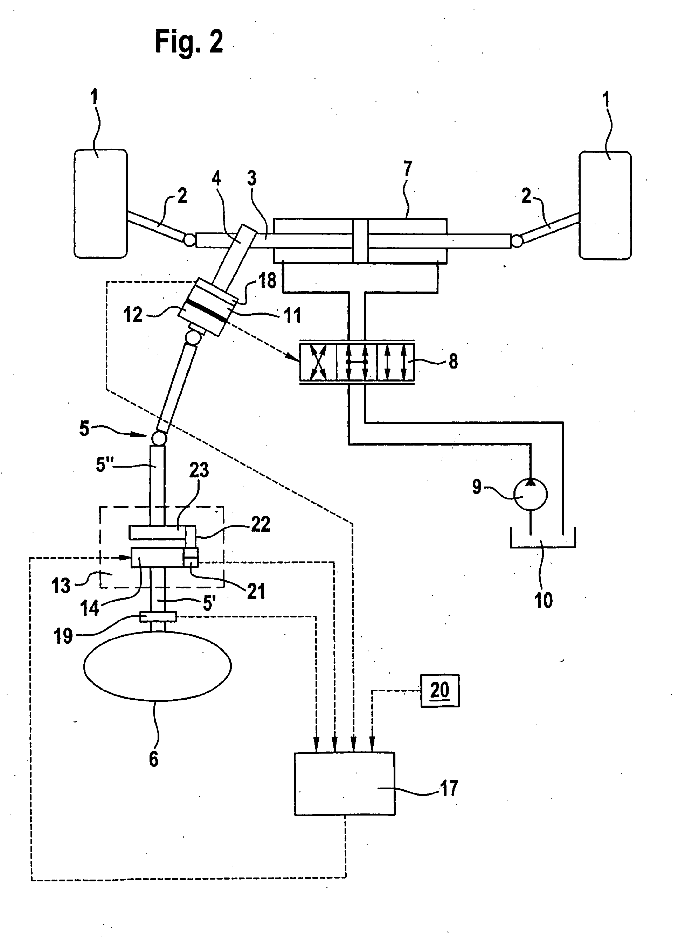

Die Ausführungsform der Fig. 2 unterscheidet sich von der Ausführungsform der Fig. 1 im wesentlichen dadurch, daß der Stellmotor 14 ein Ritzel 22 treibt, welches mit einem auf dem Wellenteil 5 ' ' drehfest angeordneten Zahnrad 23 selbsthemmungsfrei kämmt. Hier muß also der Stellmotor 14 selbst als Bremse arbeiten bzw. eine dem Stellmotor 14 zugeordnete Bremse aktiv werden, wenn zwischen den Wellenteilen 5' und 5 ' ' eine 1:1 Übersetzung gewährleistet sein soll.

## Patentansprüche

1. Lenkwellenstrang (5) zwischen Lenkhandhabe (6) und gelenkten Fahrzeugrädern (1) einer Fahrzeuglenkung, mit einer handhabenseitigen Eingangswelle (5') und einer räderseitigen Ausgangswelle (5 ' ' ) sowie einer diese Wellen antriebsmäßig koppelnden Übertragungsvorrichtung (13) mit durch Motor (14) steuerbarem Übersetzungsverhältnis,
**dadurch gekennzeichnet, daß** der Motor (14) motorwellenseitig mit der einen Welle, d.h. Eingangs- oder Ausgangswelle, zwangsgekoppelt und motorgehäuseseitig mit der anderen Welle, d.h. Ausgangs- oder Eingangswelle, drehfest verbunden ist.

2. Lenkwellenstrang nach Anspruch 1,
**dadurch gekennzeichnet, daß** die eine Welle (5 ' , 5 ' ') und die Motorwelle über ein selbsthemmendes Getriebe (15,16) miteinander zwangsgekoppelt sind.

3. Lenkwellenstrang nach Anspruch 1 oder 2,
**dadurch gekennzeichnet, daβ** die Übertragungsvorrichtung (13) spielfrei arbeitet.

4. Lenkwellenstrang nach einem der Ansprüche 1 bis 3,
**dadurch gekennzeichnet, daß** Lenkstellorgane (3) der gelenkten Fahrzeugräder (1) mit einem Servomotor (7) antriebsverbunden sind, der in Abhängigkeit von zwischen der Ausgangswelle (5 ' ' ) und den gelenkten Fahrzeugrädern übertragenen Kräften oder Momenten steuerbar ist.

5. Lenkwellenstrang nach einem der Ansprüche 1,3 und 4,
**dadurch gekennzeichnet, daß** die eine Welle und die Motorwelle selbsthemmungsfrei miteinander gekoppelt sind.

6. Lenkwellenstrang nach Anspruch 5,
**dadurch gekennzeichnet, daß** dem Motor (14) eine Bremse zugeordnet ist.

7. Lenkwellenstrang nach Anspruch 6,
**dadurch gekennzeichnet, daß** die Bremse normal wirksam ist und nur durch Energiezufuhr geöffnet werden kann.

8. Lenkwellenstrang nach einem der Ansprüche 1 bis 7,
**dadurch gekennzeichnet, daß** die eine Welle (5 ' ,5 ' ') und die Motorwelle über ein Schneckengetriebe (15,16) miteinander zwangsgekoppelt sind.
